Europäisches Patentamt

European Patent Office

Office européen des brevets

(19)

(11) Numéro de publication: **0 049 867**

**A1**

(12) # DEMANDE DE BREVET EUROPEEN

(21) Numéro de dépôt: 81108059.7

(22) Date de dépôt: 08.10.81

(51) Int. Cl.³: **B 65 B 7/28**

(30) Priorité: 15.10.80 CH 7686/80

(43) Date de publication de la demande:
21.04.82 Bulletin 82/16

(84) Etats contractants désignés:
AT BE DE FR GB IT LU NL SE

(71) Demandeur: SOCIETE DES PRODUITS NESTLE S.A.
Case postale 353
CH-1800 Vevey(CH)

(72) Inventeur: Charton, Henri Vincent Noel
Chemin de Chenailleta
CH-2013 Colombier(CH)

(54) Dispositif de thermosoudage.

(57) Dispositif de thermosoudage sur un récipient (1) d'un opercule (2) comportant une couche thermoplastique. L'organe de chauffage par contact avec l'opercule est constitué par un tissu tendu.

Fig. 1

EP 0 049 867 A1

Croydon Printing Company Ltd

## Dispositif de thermosoudage

L'invention concerne un dispositif de thermosoudage, plus particulièrement destiné à sceller sur un récipient un opercule comportant une couche thermoplastique.

Il existe des dispositifs de ce genre comprenant une membrane dont la face opposée à l'opercule reçoit un flux de chaleur par un fluide.

De tels dispositifs ne sont pas toujours suffisamment souples lorsqu'il s'agit de sceller un opercule sur l'orifice d'un récipient de verre par exemple. Ces derniers présentent des inégalités qui suffisent à provoquer des différences de pression assez importantes, au détriment de la qualité et de l'étanchéité de la soudure. Si la pression exercée sur l'opercule est localement trop forte, la couche thermoplastique peut être écrasée et refoulée sur les côtés.

Le dispositif selon l'invention ne présente pas ces inconvénients. Il est caractérisé par le fait que l'organe de chauffage en contact avec l'opercule est constitué par un tissu tendu, de préférence une toile métallique.

Dans une exécution préférée, il comporte un dispositif d'aspiration à travers le tissu pour saisir l'opercule.

Dans une forme d'exécution particulière, le tissu est un ruban sans fin.

Le dessin représente, à titre d'exemple, deux formes d'exécution de l'invention.

La figure 1 est une coupe verticale à travers une tête de thermosoudage selon l'invention.

La figure 2 est une élévation schématique d'un dispositif
de thermosoudage comportant un ruban sans fin.

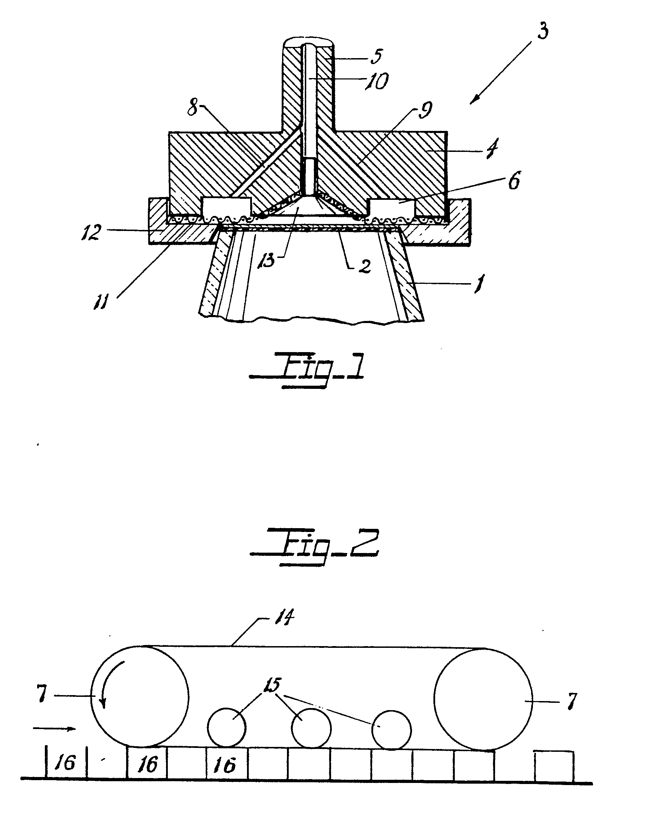

Au dessin (figure 2), 1 est un récipient scellé par un opercule 2 comportant une couche thermoplastique.

Une tête de thermosoudage généralement désignée par 3 comporte un corps 4 porté par une tige 5 qui peut transmettre un
effort de pression. La face inférieure du corps 4 comporte
une rainure 6 reliée par des conduits 8, 9 à un conduit
central 10 ménagé dans la tige 5. Ce conduit central 10 est
lui-même relié à un dispositif d'aspiration, le cas échéant
à un dispositif de soufflage.

La face inférieure de la tête de thermosoudage est couverte
d'une toile métallique 11, de préférence faite de fils
d'acier inoxydable de quelques µm de diamètre et présentant
entre les fils des interstices d'une dizaine de µm. En variante, cette toile est faite de câbles fins, plus souples
que les fils.

La toile métallique 11 est tenue à la périphérie de la tête 3
par un anneau 12. Elle est traversée en son centre par une
vis à tête conique 13 qui serre et tend la toile à l'intérieur d'un logement de conicité correspondante ménagé au
centre de la face inférieure de la tête. Cette toile peut
être chauffée par une source de chaleur telle qu'une spirale
électrique en contact avec la toile et non représentée.

Le fonctionnement du dispositif est le suivant:

Un opercule est amené sous la tête. L'aspiration par le conduit 10 étant en marche, la succion exercée à travers la partie de la toile 11 qui se trouve sous la
rainure 6  plaque un opercule contre la toile.

Les bords internes de la bague 12 centrent l'opercule; étant donné sa faible masse, celui-ci atteint très rapidement la température de soudage par contact avec la toile. L'opercule est alors descendu de manière à reposer sur le bord de l'orifice du récipient. Une brève pression de la tête suffit pour assurer le scellage. Le bord froid du récipient solidifie rapidement la couche thermoplastique. La grande souplesse de la toile, à la différence de la membrane retenant un liquide de dispositifs comparables, assure une répartition régulière et uniforme de la pression sur toute la périphérie de l'orifice du récipient, malgré d'éventuelles inégalités de cet orifice, sans risque d'effort excessif. Finalement, l'aspiration cesse et la tête est relevée pour répéter le cycle.

La variante représentée à la Figure 2 comporte un ruban sans fin 14 de toile métallique porté par deux rouleaux principaux 7 et chauffé. Le dispositif comporte également des rouleaux presseurs 15. Une série de récipients 16 portés par un dispositif de transport tel qu'un ruban transporteur défile sous le ruban 14 en synchronisme avec celui-ci. Des opercules sont placés sur les récipients avant leur passage sous le ruban 14. Dans une forme d'exécution préférée, les opercules sont placés sur le brin supérieur du ruban 14, plaqués contre celui-ci par aspiration à travers le ruban et préchauffés jusqu'à ce qu'ils soient scellés sur les récipients par la pression des rouleaux 15.

Revendications

1. Dispositif de thermosoudage sur un récipient d'un opercule comportant une couche thermoplastique caractérisé par le fait que l'organe de chauffage par contact avec l'opercule est constitué par un tissu tendu.

2. Dispositif selon la revendication 1, caractérisé par le fait que l'organe de chauffage est constitué par une toile métallique.

3. Dispositif selon la revendication 2, caractérisé par le fait que la toile est faite de fils d'acier inoxydable.

4. Dispositif selon la revendication 1, caractérisé par le fait qu'il comporte un dispositif d'aspiration à travers le tissu.

5. Dispositif selon la revendication 1, caractérisé par le fait que le tissu est un ruban sans fin.

0049867

1/1

Fig_1

Fig_2

# 0049867

## DOCUMENTS CONSIDERES COMME PERTINENTS

| Catégorie | Citation du document avec indication, en cas de besoin, des parties pertinentes | Revendication concernée |
|---|---|---|
| X | FR - A - 2 419 220 (SOCIETE GENERALE POUR L'EMBALLAGE) <br><br> * page 4, lignes 5-29; figure 3 * <br><br> --- | 1,2 |
|  | US - A - 3 315 439 (JEAN-LOUIS PIERRE) <br><br> * colonne 2, lignes 38-48; figures 1 et 2 * <br><br> --- | 3,5 |
|  | FR - A - 2 241 453 (BOSCH) <br><br> * page 2, lignes 5-25; figure 1 * | 4 |

**CLASSEMENT DE LA DEMANDE (Int. Cl. 3)**

B 65 B 7/28

**DOMAINES TECHNIQUES RECHERCHES (Int. Cl. 3)**

B 65 B
B 67 B

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 07.01.1982 | CLAEYS |

OEB Form 1503.1 06.78